# EUROPÄISCHE PATENTSCHRIFT

(11) **EP 3 241 254 B1**
(45) Veröffentlichungstag und Bekanntmachung des Hinweises auf die Patenterteilung: **25.04.2018**
(21) Anmeldenummer: 16711144.2
(22) Anmeldetag: 23.03.2016
(51) Int. Cl.: H01M 2/10, H01M 2/20, H01M 10/0525, H01M 10/04

(54) **BATTERIEMODUL**
BATTERY MODULE
MODULE DE BATTERIE

(30) Priorität: 16.04.2015 DE 102015004762; 22.09.2015 DE 202015006545 U
(43) Veröffentlichungstag der Anmeldung: 08.11.2017
(73) Patentinhaber: Neuss, Wilhelm, 71665 Vaihingen an der Enz (DE)
(72) Erfinder: HEMPEL, Jörg, 72574 Bad Urach/Wittlingen (DE); NEUSS, Wilhelm, 71665 Vaihingen an der Enz (DE)
(74) Vertreter: Munk, Ludwig Hubert
(86) Internationale Anmeldenummer: PCT/EP2016/025028
(87) Internationale Veröffentlichungsnummer: WO 2016/165834

(56) Entgegenhaltungen:
- EP-A2- 2 157 634
- WO-A1-2014/125807
- DE-C- 515 051
- US-A1- 2011 177 373
- US-A1- 2011 223 776
- US-A1- 2013 224 532

## Beschreibung

Die Erfindung betrifft ein aus einer Vielzahl parallel und seriell verschalteter Rundzellen aufgebautes Batteriemodul gemäß dem Oberbegriff des Anspruchs 1.

Seit dem Aufkommen der Elektromobilität und der verstärkten Nutzung von erneuerbaren Energien wird auch verstärkt nach größeren Stromspeicherlösungen gesucht. Nach dem gegenwärtigen Stand der Technik sind Lithium-Ionen-Akkumulatoren dafür am geeignetsten, weil diese gegenüber anderen eine relativ hohe Energiedichte, also Ladungskapazität bezogen auf das Batteriegewicht, aber auch bezogen auf den benötigten Raum aufweisen. Allerdings besteht teilweise Explosionsgefahr, so dass Sicherheitsaspekten große Aufmerksamkeit gewidmet werden muss. Dazu kommen die zumindest mit heutigen Fertigungsmöglichkeiten noch relativ hohen Kosten.

Eine Entwicklungslinie geht auf die Entwicklung von Groß-Akkumulatorzellen. Allerdings ist die Größe und Ladungsdichte solcher Einzel-Batteriemodule aufgrund der im Auge zu behaltenden Explosionsgefahr beschränkt, so dass meist mehrere, immer noch relativ große, dafür mit wenig explosionsgefährdeten, aber auch eine geringere Ladungsdichte aufweisenden Ionen bestückte Großzellen miteinander verschaltet werden. Ein Beispiel hierfür ist der deutschen Patentanmeldung DE 10 2013 203 102 A1 zu entnehmen, welche ein aus zwei Batteriezellen gebildetes Batteriemodul zeigt. Die beiden Batteriezellen sind dabei in Serie geschaltet, um die gelieferte Spannung zu verdoppeln, bzw. den durch eine potentielle Explosion potentiell angerichteten Schaden zu halbieren. Ein weiteres Beispiel eines Hochvolt-Batteriemoduls, welches aus einem Stapel in Reihe geschalteter Rahmenflachzellen, also flach bauenden Großbatterie-Einzelzellen aufgebaut ist, ist der DE 10 2010 013 034 A1 zu entnehmen, ein ähnliches Modul der WO 2011/092039 A1. Die US-Patentanmeldung US 2006/0246348 A1 geht auf eine noch weitergehende Modularisierung. Prismatische Einzelzellen sind zu Zellsträngen an ihren Polen zusammengeschweißt. Mehrere nebeneinander in entsprechenden Haltern aufgenommene Einzelzellstränge bilden ein Batteriemodul, mit die Einzelzellen umströmendem Kühlmedium und einem durch die miteinander verbundenen Halter gebildeten Gehäuse.

Aufgrund der Begrenzung des durch die Explosion einer Einzelzelle potentiell angerichteten Schadens und der durch Massenfertigung erzielbaren Kostenvorteile geht eine weitere Entwicklungsrichtung auf die Verwendung von relativ kleinen rundgewickelten Einzelzellen, die parallel und/oder in Serie angeordnet werden, um Batteriemodule mit der gewünschten hohen Kapazität und Ausgangsspannung zu fertigen. Aufgrund des relativ beherrschbaren Risikos, das mit dem Versagen einer Einzelrundzelle verbunden ist, können hier Ionen mit relativ hoher Ladungsdichte zum Einsatz kommen, die jedoch auch stärker explosionsgefährdet sind und daher für Großbatteriezellen ungeeignet wären, bei kleinen Rundzellen aber lediglich zu einem Ausgasen führen, oder im Falle einer Explosion zumindest nur einen relativ überschaubaren Schaden anrichten würden.

Ein Pionier, der die mit der Massenfertigung von rundgewickelten Einzelzellen verbunden Kostenvorteile erkannt hat ist die Fa. Tesla. In den Tesla-Fahrzeugen befinden sich im Unterboden Batteriemodule, die aus mehreren nebeneinander verteilt angeordneten, mittels zwischengeordneten Schalterleitungen zusammengeschalteten Batterieblöcken bestehen, wobei jeder Batterieblock eine Lage aufrecht stehender Lithium-Ionen-Rundzellen aufweist, wie dies beispielsweise der europäischen Patentanmeldung EP 2 157 634 A2 zu entnehmen ist. Zwischen den Rundzellen eines Batterieblocks sind dabei Kühlleitungen hindurchgeführt und die einzelnen Rundzellen sind relativ aufwendig mit einem Leiterdraht verschweißt, der wiederum mit einer Leiterschiene verschweißt ist.

Der Leiterdraht dient als eine Art Strombegrenzer nach Art einer Sicherung, soll also eine übermäßige Leistungsabgabe/ -aufnahme einer Einzelzelle und damit deren Versagen oder potentielle Explosion verhindern. Die Kühlung soll dem Effekt entgegenwirken, dass sich bei Versagen einzelner Zellen oder selbst bei ungenügender Leistungsabgabe einzelner Zellen andere Zellen stark erwärmen und in der Dauerüberbelastung bald versagen oder sogar ausgasen/explodieren.

Es wird also versucht, durch die Einzeldrahtkontaktierung eine über alle Rundzellen möglichst gleichmäßige Strom- bzw. Spannungsabgabe zu erreichen, um das Versagen von einzelnen Zellen zu verhindern, nicht nur um die Kapazität und Abgabespannung des Batteriemoduls oder eines einzelnen Batterieblocks des Moduls zu erhalten, sondern um den Gesamtblock bzw. das Gesamtmodul nicht irreversibel zu schädigen, wenn die noch funktionierende Zellen aufgrund der ausgefallenen Zelle überlastet und überhitzt werden.

Durch die stehende Anordnung der Rundzellen in den einzelnen Blöcken und die Anordnung der Batterieblöcke in einer Ebene nebeneinander, sowie durch die Kühlleitungen in den Blöcken und den für die Verschaltung der Batterieblöcke und die Einzeldrahtkontaktierung der Rundzellen nötigen Platz, steigt jedoch der Platzbedarf für das Gesamtbatteriemodul bei entsprechend sinkender Ladungskapazität bezogen auf den für das Modul genutzten Raum und bezogen auf die eingesetzten Fertigungskosten.

Ein weiteres Batteriemodul mit stehender Anordnung der in einer Ebene angeordneten Rundzellen zeigt die US-Patentanmeldung US 2011/177373 A1.

Aufgrund der vorstehenden Nachteile einer stehenden Anordnung der Rundzellen in einer einzigen Ebene wird bei der Fertigung von Vielrundzellenbatteriemodulen häufig eine liegende Anordnung der Rundzellen in Batterieblöcken bevorzugt, wobei die Batterieblöcke aneinander anschließend in einer Reihenschaltung und -anordnung einen Strang von Batterieblöcken bilden, die jeweils eine Lage neben- und übereinander liegender Rundzellen aufweisen, die über entsprechende Kontaktierungen an ihren beiden Enden parallel geschaltet sind, wobei die aus parallel geschalteten Rundzellen gebildeten Batterieblöcke dann im Batterieblockstrang wiederum in Reihe geschaltet sind.

Ein derartiges Batteriemodul ist beispielsweise der europäischen Patentschrift EP 2 410 590 B1 zu entnehmen. Jeweils mehrere Rundzellen eines Blocks sind dabei per Punktschweißung an Kontaktplatten geheftet und so parallel verschaltet. Die Kontaktplatten sind über seitliche Laschen mit Kontaktplatten der nächsten Ebene im Batterieblockstrang verbunden. Die Rundzellen sind ferner in Haltern mit halbzylindrischen Aufnahmen aufgenommen, wobei die Halter achsparallel zu den Rundzellen Durchgangsbohrungen aufweisen, durch die Zugstangen geführt sind, welche an beiden Enden des Batterieblockstrangs eingespannt sind und das Batteriemodul so zusammenhalten. Zwischen den durch Punktschweißen an die Kontaktplatten zu einem Batterieblock zusammengefügten Rundzellen eines Blocks und dem daran anschließenden Batterieblock sind weitere Kontaktplatten eingefügt, um die Batterieblöcke in Serie zu schalten.

Ein ähnliches Batteriemodul zeigt die WO 2012/060754 A1 oder die parallele US 2013/224532 A1. Mehrere Batteriepacks, die wiederum aus mehreren parallel geschalteten Rundzellen bestehen, sind zu einem Batterieblockstang hintereinander angeordnet und in Serie geschaltet. Die Reihenschaltung der Batterieblöcke und die Parallelschaltung der Rundzellen in jedem der Batterieblöcke erfolgt dabei über gelochte Metallplatten zwischen den Batterieblöcken, wobei in die Löcher der Metallplatten Nickelstreifen gedrückt sind, die dort mit einem Pol einer Rundzelle punktverschweißt sind. Ähnliches ist der US 2004/0197642 A1 zu entnehmen. Dort ist die Serienschaltung zweier Module, die aus jeweils drei parallel geschalteten zylindrischen Zellen bestehen, gezeigt. Die Parallel- und Reihenschaltung erfolgt hier über Kontaktplatten, die den Polen der Rundzellen zugeordnete, quadratische Anschlussflächen aufweisen. In den Anschlussflächen sind Schlitze vorgesehen, welche zum Punktverschweißen mit den Rundzellen dienen.

US 2011/223776 A1 offenbart ein lösbares Zwischenverbindungsmodul, welches zur Ausbildung lösbarer elektrischer Verbindungen mit einer Mehrzahl von elektrischen Speicherzellen vorgesehen ist. Die elektrischen Verbindungen mit den Speicherzellen werden durch Druckkontakte hergestellt, die durch eine externe Kraft auf die Pole der Zellen gedrückt werden. Zur Ausgabe von elektrischer Energie an Ausgangsanschlüsse sind dabei Ausgangsbusschienen an dem Zwischenverbindungsmodul angeordnet.

WO 2014/125807 A1 oder die parallele US 2016/006006 A1 zeigen ein weiteres Batteriemodul mit einer Mehrzahl von Rundzellen, wobei die Rundzellen zu einer aus zwei Rundzellenstapel bestehende Rundzellenstapelreihe gruppiert sind. Die beiden Rundzellenstapel weisen dabei jeweils gleich viele Rundzellen auf.

Die WO 2011/096863A1 zeigt ein Batteriemodul mit vier Reihen von Rundzellen, deren Rundzellen jeweils parallel geschaltet sind, wobei die Rundzellenreihen elektrisch in Reihe geschaltet sind. Geometrisch sind die Rundzellenreihen nicht in Reihe, sondern auf beiden Seiten einer Leiterplatte angeordnet. Die Leiterplatte enthält das Batteriemanagement. An der Leiterplatte sind rechtwinklig abstehende Kontaktplatten angebracht, welche wiederum Nickelstreifen mit den Polen der Rundzellen zugewandten, abgebogenen Kontaktflächen aufweisen. Nickel wird trotz schlechterer Leitfähigkeit als beispielsweise Kupfer eingesetzt, weil es sich im Gegensatz zu Kupfer gut schweißen lässt. Eine reine Klemmanordnung zur Kontaktierung der Rundzellenpole anstatt der Verschweißung mit den Nickelstreifen wird als weniger zuverlässig im Hinblick auf die elektrische und mechanische Verbindung angesehen.

Die deutsche Patentanmeldung DE 10 2010 013 003 A1 zeigt ferner neben einem aus einem Stapel Flachzellen aufgebauten Batteriemodul auch ein Batteriemodul, welches aus Batteriepacks besteht, die jeweils aus einer Lage Li-Ionen-Rundzellen aufgebaut sind, wobei die Batteriepacks in der so gebildeten Batteriepackreihe durch zwischengeordnete Polplatten in Reihe geschaltet sind und die Rundzellen jedes Batteriepacks an ihren beiden Polenden mit der dortigen Polplatte verschweißt und damit parallel geschaltet sind.

Das Verschweißen der Rundzellen per Laserschweißen mit Polplatten etc. an unzugänglichen Stellen zwischen den Rundzellen der Batteriepacks oder per Punktschweißen mit Polplatten unter Verwendung weiterer Kontaktierungsplatten zwischen den Batteriepacks ist jedoch aufwendig und zudem fehleranfällig.

Hiervon ausgehend ist es Aufgabe der vorliegenden Erfindung, ein Vielrundzellen-Batteriemodul zu schaffen, welches eine bezogen auf Gewicht, Volumen und Herstellungskosten hohe Energiedichte aufweist und den im Hinblick auf Explosionsgefahr und Lebensdauer bestehenden Bedenken Rechnung trägt.

Diese Aufgabe wird durch die Merkmale des Anspruchs 1 gelöst.

Ein gattungsgemäßes Batteriemodul weist eine Vielzahl Rundzellen mit gleichen Abmessungen, gleicher Soll-Ladekapazität und gleicher Sollspannung auf. Die Rundzellen sind dabei zu einer Reihe von Rundzellenstapeln gruppiert. Die Rundzellenstapel sind in Reihe hintereinander bzw. aufeinander folgend angeordnet und weisen alle eine gleiche Mehrzahl Rundzellen auf. Dabei sind die Rundzellen in jedem Rundzellenstapel achsparallel zur Richtung, in der die Rundzellenstapel aufeinander folgen, d. h. der Stapelreihenrichtung angeordnet, und zwar neben- und aufeinanderliegend auf in der Stapelreihenrichtung gleicher Position. Rundzellen im Sinne der Erfindung sind dabei rundgewickelte Batterie- oder Akkumulatorzellen, bevorzugt Li-Ionen-Zellen mit zylindrischer Form, deren Pole an den beiden flachen Stirnflächen liegen.

Dabei sind an den in und entgegen der Stapelreihenrichtung gelegenen beiden Enden der Rundzellenstapelreihe und zwischen den aneinander grenzenden Rundzellenstapeln Kontaktplatten vorgesehen, welche die Rundzellen jedes Rundzellenstapels an ihren in und entgegen der Stapelreihenrichtung gelegenen Polen elektrisch parallel verbinden. Endseitige Kontaktplatten an beiden in Stapelreihenrichtung gelegenen Seiten jedes Rundzellenstapels verschaltet die Rundzellen in dem Stapel also parallel. Ferner sind sämtliche Rundzellen mit elektrisch gleichgerichteter Polung strangweise angeordnet, um so eine der Mehrzahl von Rundzellen pro Rundzellenstapel entsprechenden Mehrzahl fluchtender Rundzellenreihen bzw. -stränge zu bilden. Die Rundzellen in einer Rundzellenreihe sind also koaxial angeordnet und dabei über die Kontaktplatten jeweils elektrisch in Reihe geschaltet bzw. verbunden, bei gleichzeitiger Parallelschaltung.

Um eine gleichförmige Stromein- bzw. -ausleitung in alle Rundzellenreihen zu gewährleisten sind dabei erfindungsgemäß zwei gegenüber der Kontaktplatte dickwandige Polplatten vorgesehen, die an den beiden Enden der Rundzellenstapelreihe außen auf der dortigen Kontaktplatte aufliegen. Um das Batteriemodul elektrisch anzuschließen können Anschlussleitungen oder dergleichen zu den Polplatten führen. Die Polplatten können auch die Stromanschlüsse des Batteriemoduls tragen.

Das erfindungsgemäße Batteriemodul zeichnet sich weiter dadurch aus, dass die Kontaktplatten Vorsprünge aufweisen, welche jeweils einen Pol einer Rundzelle kontaktieren, indem sie auf den Pol drücken, mit dem Rundzellenpol aber nicht einstückig bzw. stoffschlüssig verbunden sind, also nicht verschweißt sind.

Das erfindungsgemäße Batteriemodul zeichnet sich gemäß eines ersten Aspekts der Erfindung weiter dadurch aus, dass die Vorsprünge identische Abmessungen aufweisen und an Achsen der Rundzellenreihen entsprechenden Positionen an den Kontaktplatten vorgesehen sind. Dabei sind alle Rundzellenpole über einen der Vorsprünge kontaktiert, wobei die Kontaktplatten an den Vorsprüngen und in flachen Abschnitten zwischen den Vorsprüngen elektrisch leitend sind.

Ähnlich wie bei der Einzeldrahtkontaktierung kann durch die Kontaktierung der Pole aller rundgewickelten bzw. Rundzellen mittels der relativ einfach mit identischen Abmessungen herstellbaren Vorsprünge eine an allen Zellen identische, definierte Strom- bzw. Spannungsabgabe (oder beim Laden -aufnahme) pro Einzelzelle sichergestellt werden, allerdings mit einfachsten Mitteln, und damit niedrigen Herstellungskosten. Die sich aus der Bauform "liegender Batteriestapelstrang" ergebenden Vorteile im Hinblick auf eine möglichst dichte Packung der Rundzellen werden dabei ebenfalls erzielt, ohne jedoch eine relativ aufwendige und fehleranfällige Kontaktierung der Rundzellen per Schweißverbindung durchführen zu müssen.

Dies ist besonders vorteilhaft, weil sich gezeigt hat, dass die Schweißverbindungen nicht mit der für eine gleichförmige Strom- bzw. Spannungsverteilung auf alle Rundzellen nötigen Gleichmäßigkeit hergestellt werden können, was zur Folge hat, dass einzelne Rundzellen überlastet werden und überhitzen.

Entsprechenden Gegenmaßnahmen z.B. im Batteriemanagement und bei der Kühlung, welche nicht nur den Kostenvorteil der Vielrundzellenbatterie zumindest teilweise wieder zunichte machen, sondern auch Platz erfordern, insbesondere die Kühlung, wodurch die erzielbare Energiedichte des Batteriemoduls sinkt, können dadurch entfallen.

Denn mit der erfindungsgemäßen Kontaktierung über die mit Vorsprüngen versehenen Kontaktplatte kann auf einfache Weise eine gleichmäßige Strom- und Spannungsverteilung auf alle Zellen erreicht werden, so dass die Lebensdauer des Batteriemoduls gegenüber geschweißten Batteriemodulen stark ansteigt. Wie Thermografieaufnahmen gezeigt haben, kann man aufgrund dieser gleichmäßigen Verteilung von Strom und Spannung und damit auch der Temperatur sogar ohne Kühlung oder sonstige teure und/oder platzaufwendige Maßnahmen auskommen, was Kosten und Platzbedarf nochmals erheblich senkt.

Es wird davon ausgegangen, dass die Vorsprünge der Kontaktplatten dabei eine Durchkontaktierung der Rundzellenreihen bewirken, also eine Reihenschaltung der auf der gleichen Achse angeordneten Rundzellen, wobei sich der Strom den Weg des geringsten Widerstands bzw. kürzesten Weges sucht, so dass der Hauptanteil seriell entlang der jeweiligen Rundzellenreihe fließt, über die flachen Abschnitte der den Rundzellenstapeln zwischengeordneten Kontaktplatten dagegen lediglich ein Potentialausgleich bzw. ein Ausbalancieren in Parallelrichtung erfolgt, falls es Strom- oder Spannungsunterschiede zwischen den seriell durch die Rundzellenreihen fließenden Strömen gibt. Die hauptsächliche Parallelverteilung des Stromflusses auf die Rundzellenreihen erfolgt dagegen an den beiden die Pole des Batteriemoduls bildenden Enden der Rundzellenstapelreihe, nämlich über die dort vorgesehene Polplatten. Vorteilhaft sind die Kontaktplatten also entsprechend ausgebildet, so dass der Hauptanteil des Stroms seriell entlang der Rundzellenreihen fließt, über die flachen Abschnitte der den Rundzellenstapeln zwischengeordneten Kontaktplatten dagegen lediglich ein Potentialausgleich bzw. ein Ausbalancieren in Parallelrichtung erfolgt.

Als besonders geeignetes Material für die Kontaktplatten hat sich dabei Kupferblech erwiesen, welches nicht nur eine gute Leitfähigkeit aufweist, sondern sich auch auf einfache und kostengünstige Weise mit den abmessungsgleichen Vorsprüngen versehen lässt, etwa durch Einprägen auf einer entsprechenden Stanze. Selbstverständlich könnte die Kontaktplatte aber auch aus einem anderen Metallblech sein, etwa aus einem aus einer Kupferlegierung bestehenden Blech. Nach dem Einprägen der Noppen bilden die Bereiche des Blechs zwischen den Noppen die für die Parallelkontaktierung der Rundzellen in den Rundzellenstapeln nötigen flachen Abschnitte von selbst.

Zwischen zwei benachbarten Rundzellenstapeln können dabei jeweils einfach zwei dieser genoppten Kontaktplatten Rücken an Rücken mit den beiden Rundzellenstapeln zugewandten Noppen vorgesehen sein, um die Rundzellenreihen seriell durchzukontaktieren. An, bevorzugt zwischen die beiden aneinander liegenden Kontaktplatten können bevorzugt flache Stromabnahmeanschlüsse für Messfühler oder Ladeanschlüsse eines Batteriemanagements angebracht, bevorzugt eingeschoben und dort verklemmt sein. An den beiden Enden der Rundzellenstapelreihe reicht dagegen jeweils eine, mit ihren Noppen auf die außen liegenden Pole der Rundzellen des ersten und des letzten Rundzellenstapels drückende Kontaktplatte.

Gemäß eines zweiten Aspekts der Erfindung können die den Rundzellenstapeln zwischengeordneten Kontaktplatten an den den Achsen der Rundzellenreihen entsprechenden Positionen aber auch Vorsprünge identischer Abmessungen aufweisen, die jeweils beide einander zugewandten Pole zweier aneinander anschließender Rundzellen einer Rundzellenreihe kontaktieren, indem sie jeweils auf die beiden Pole drücken.

Konkret könnten die Kontaktplatten gemäß des zweiten Aspekts der Erfindung als Leiterplatten bzw. Platinen ausgebildet sein. Dabei kann den benachbarten Rundzellenstapeln jeweils eine als Platine ausgebildete Kontaktplatte oder eine Paar als Platinen ausgebildete Kontaktplatten zwischengeordnet sein. Auch an den in Stapelreihenrichtung gelegenen Enden der Rundzellenstapelreihe kann eine als Platine ausgebildete Kontaktplatten vorgesehen sein.

Dabei können die Kontaktplatten an den den Achsen der Rundzellenreihen entsprechenden Positionen Durchgangsbohrungen aufweisen. Die Vorsprünge können dann als in die Durchgangsbohrungen gesteckte, vorzugsweise aus Kupfer oder einem anderen, gut leitenden metallischen Material bestehende Hülsen bzw. Bolzen oder als dort gesetzte Lötpunkte ausgebildet sein. Auf der jeweiligen Kontaktplatte können dann Leiterbahnen z.B. aufgedruckt sein, welche dazu dienen, jeden der Vorsprünge einer Kontaktplatte mit jedem anderen Vorsprung der Kontaktplatte parallel zu verbinden. Dazu kann beispielsweise von jedem der Vorsprünge eine Leiterbahn zu einem Leiterring führen. Entscheidend ist auch hier, dass der Hauptstromfluss in serielle Richtung gelenkt wird und in Parallelrichtung nur eine gleichmäßige Verteilung bzw. ein Ausgleich etwaiger Unterschiede erfolgt. Entsprechend muss der Widerstand an den Vorsprüngen geringer sein als in Parallelrichtung, was schon durch den kürzeren Weg, aber z.B. auch durch größere Leiterquerschnitte bewirkt werden kann.

Diese Parallelverbindungsleiterbahnen können dann ähnlich wie bei der Einzeldrahtkontaktierung im Stand der Technik so dünn ausführt sein, dass sie als Strombegrenzer wirken, also bei Überlast durchbrennen, so dass die entsprechende Zelle aus dem parallelen Verbund im jeweiligen Rundzellenstapel gelöst wird. Es wäre auch denkbar die parallelen Verbindungen jeweils über eine SMD-Sicherung abzusichern. Die seriellen Verbindungen an den Vorsprüngen kann je nach Bedarf jeweils durch eine SMD-Sicherung oder durch eine definierte Verbindung (Draht, Hülse etc.) abgesichert werden, die bei Überschreiten eines bestimmten Stromwertes die Rundzelle seriell dauerhaft trennt. Als Leiterplatten ausgebildete Kontaktplatten haben also den Vorteil, als Sicherungen gestaltete Leiterbahnen und/oder zusätzliche Sicherungselemente aufnehmen zu können, die zur Trennung einer defekten Rundzelle vom Rest dienen, um einen Kaskadeneffekt zu vermeiden

Gemäß eines dritten Aspekts der Erfindung zeichnet sich das erfindungsgemäße Batteriemodul ferner dadurch aus, dass die Kontaktplatten an den Achsen der Rundzellenreihen entsprechenden Positionen auf ihren den Pluspolen der Rundstellen zugewandten Seiten Vorsprünge identischer Abmessungen aufweisen, welche jeweils einen Pluspol einer Rundzelle kontaktieren, in dem sie auf den jeweiligen Pluspol drücken, mit dem Rundzellenpol aber nicht einstückig bzw. stoffschlüssig verbunden sind, also ebenfalls nicht verschweißt sind. Dabei sind alle Rundzellenpluspole über einen der Vorsprünge kontaktiert, wobei die Kontaktplatten an den Vorsprüngen und in flachen Abschnitten zwischen den Vorsprüngen elektrisch leitend sind. Zum Anderen zeichnet sich das Batteriemodul gemäß des dritten Aspekts der Erfindung dadurch aus, dass die Kontaktplatten auf ihren den Minuspolen der Rundzellen zugewandten Seiten zwar ebenfalls Vorsprünge identischer Abmessungen aufweisen, aber pro Minuspol eine Mehrzahl von Vorsprüngen, insbesondere drei, die den jeweiligen Minuspol kontaktieren, in dem sie auf den Minuspol drücken, mit dem Minuspol aber nicht einstückig verbunden sind, so dass alle Rundzellenminuspole über eine der Mehrzahl Vorsprünge kontaktiert sind. Damit auch die einer der beidne Endkontaktplatten bzw. endseitigen Kontaktplatten benachbarten Rundzellenpole über einen der Vorsprünge bzw. eine der Mehrzahl an Vorsprüngen kontaktiert werden, ist es vorteilhaft, wenn die pluspolseitige Endkontaktplatte die gleichen Vorsprünge wie die Kontaktplatten auf deren Pluspolseite aufweisen und wenn die minuspolseitige Endkontaktplatte die gleichen Mehrzahlen von Vorsprüngen aufweist, wie die Kontaktplatten auf deren Minuspolseite.

Durch die Vorsprünge gelingt es, die Rundzellen in dem Batteriemodul per Klemmkraft mechanisch zu fixieren und elektrisch zu kontaktieren. Dabei wäre es im Rahmen der Erfindung zwar auch möglich, die Minuspole jeweils mit einem mittigen Vorsprung zu kontaktieren und die Pluspole jeweils mit einer dazu konzentrisch angeordneten Mehrzahl von Vorsprüngen. Da die Minuspole der Rundzelle in ihrer Mitte bekanntlich besonders weich sind, gelingt durch die exzentrische Kontaktierung der Minuspole ein wirksamer Schutz der Rundzellen vor Beschädigung bei gleichzeitig guter Fixierung der Rundzellen aufgrund der minuspolseitigen Klemmung an mehreren Punkten, vorteilhaft an drei Punkten ("Dreibeinprinzip"), welche in diesem Sinne weiter bevorzugt konzentrisch und gleichmäßig über den Umfang verteilt um die jeweilige Rundzellenreihenachse herum angeordnet sind. Alternativ zu der bevorzugt punktförmigen Kontaktierung mit mehreren Vorsprüngen pro Kontaktierung eines der Minuspole wären im Rahmen der Erfindung auch jeweils ringförmig umlaufende Vorsprünge denkbar.

Die Vorteile im Hinblick auf die zuverlässig identische, definierte Strom- bzw. Spannungsabgabe (oder beim Laden -aufnahme) pro Einzelzelle und gleichförmige Strom- bzw. Spannungsverteilung auf alle Rundzellen bei niedrigen Herstellungskosten, kompakter Bauform bei hoher Energiedichte sowie der trotz oder gerade wegen des einfachen Aufbaus ohne aufwändige Kühlung und Batteriemanagementmaßnahmen hohen Lebensdauer sind schon in Zusammenhang mit dem ersten Aspekt der Erfindung erwähnt worden und treffen auch hier zu, ebenso die schon in Zusammenhang mit dem ersten Aspekt der Erfindung erläuterte Wirkung im Hinblick auf Ausbalancierung und Verteilung von Strom und Spannung.

Als besonders geeignetes Material für die Kontaktplatten hat sich dabei auch hier Kupferblech erwiesen, welches sich auf einfache und kostengünstige Weise mit den Vorsprüngen versehen lässt, etwa durch Einprägen auf einer entsprechenden Stanze. Selbstverständlich könnten die Kontaktplatten aber auch aus einem anderen Metallblech sein, etwa aus einem aus einer Kupferlegierung bestehenden Blech. Nach dem Einprägen der Noppen bilden die Bereiche des Blechs zwischen den Noppen die für die Parallelkontaktierung der Rundzellen in den Rundzellenstapeln nötigen flachen Abschnitte von selbst.

Durch die exzentrische Anordnung der Minuspol-Kontaktierungsvorsprünge gelingt es, die Kontaktierungsvorsprünge sowohl für die Minuspole eines Rundzellenstapels als auch für die Pluspole des folgenden Rundzellenstapels an einer einzigen Kontaktplatte z.B. aus Kupferblech einzuprägen, ohne dass dadurch ein Nachteil im Hinblick auf die elektrische Kontaktierung entstehen würde. Mechanisch wirkt das in beide Richtungen genoppte Blech der Kontaktplatten wie eine Feder. Somit reicht es aus, zwei benachbarten Rundzellenstapeln jeweils nur eine Kontaktplatte, beispielsweise aus Kupferblech, mit nach beiden Seiten eingeprägten Vorsprüngen zwischenzuordnen, so dass es zu einer entsprechenden Material- und Gewichtseinsparung kommt. An den beiden Enden der Rundzellenstapelreihe reicht dagegen jeweils eine, mit ihren Noppen auf die außen liegenden Pole der Rundzellen des ersten und des letzten Rundzellenstapels drückende Endkontaktplatte, wobei hier auch identisch genoppte Endkontaktplatten denkbar wären.

Durch die Federwirkung der Kontaktplatten bleibt das Batteriemodul auch bei Bewegung und auf Dauer sicher kontaktiert, wobei dadurch gleichzeitig Zellbeschädigungen minimiert werden.

Zwischen zwei benachbarten Rundzellenstapeln könnten aber auch zwei genoppte Kontaktplatten Rücken an Rücken mit den beiden Rundzellenstapeln zugewandten Noppen vorgesehen sein, um die Rundzellenreihen seriell durchzukontaktieren. An, bevorzugt zwischen die beiden aneinander liegenden Kontaktplatten können dann bevorzugt flache Stromabnahmeanschlüsse für Messfühler oder Ladeanschlüsse eines Batteriemanagements angebracht, bevorzugt eingeschoben und dort verklemmt sein.

Der gegenüber der Dicke der Kontaktplatten größeren Dicke der Polplatten kommt dabei gemäß allen Aspekten der Erfindung eine entscheidende Bedeutung zu, wobei die Polplatten bevorzugt aus Kupfer bestehen, aber auch andere Metalle, wie z.B: Kupferlegierungen aber auch Aluminium denkbar wären. Denn um dem Zellbverbund die maximale Stromstärke entnehmen zu können müssen die stromabnehmenden Polplatten ausreichend dimensioniert sein, um keinen Flaschenhals im Stromkreis zu bilden. Versuche haben dabei vorteilhafte Dicken von Kupfer-Polplatten ab 3mm aufwärts, bevorzugt 4mm bis 7mm, beispielsweise 5 mm ergeben. Versuche haben gezeigt, dass damit der maximale Temperaturunterschied im Batteriemodul von 2 Grad Celsius nicht überschritten wird. Hier wurden jeweils die Zellen an der maximalen Nennlast bis zur Entladeschlussspannung entladen. Der Nachteil des Mehrgewichtes durch die dicken Stomabnehmerplatten wird durch die geringen Übergangswiderstände der Noppen-Kontaktplatten dahingehend kompensiert, dass durch die gleichmäßigen Temperaturen im Regelfall auch unter Volllast die Nennkapazität entnommen werden kann.

Anders als bekannte Batteriemodule, die aufgrund des Fehlens entsprechend dimensionierter Polplatte einen nicht definierten Stromfluss und damit Probleme mit der Wärmeabfuhr bei höheren Strömen aufweisen, insbesondere bei dauerhafter Entladung im Nennstrombereich der Einzelzelle, und daher mit geringerer Stromstärke oder mit mehr Zellabstand und passiver bzw. aktiver Kühlung betrieben werden müssen, lassen die ausgeglichenen Temperaturen bei der hier vorgeschlagenen Batteriemodule die dichteste Packung der Rundzellen bei Betrieb mit Nennstrom der Einzelzellen zu.

In den Rundzellenstapeln des Batteriemoduls sind die Rundzellen daher vorteilhaft mit dichtester Packung aneinander liegend angeordnet:

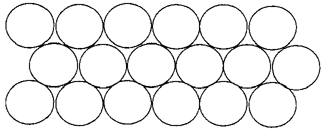

Das Batteriemodul eignet sich insbesondere für größere Zellverbünde und weist daher vorteilhaft drei oder mehr Rundzellenstapel mit jeweils zehn oder mehr Rundzellen auf.

Um die Rundzellen in der das Batteriemodul bildenden Rundzellenstapelreihe zu halten sind vorteilhaft Spannmittel vorgesehen, die eine in Stapelreihenrichtung wirkende Klemmkraft auf die Rundzellenstapelreihe ausüben. Dadurch werden die Rundzellen mit ihren Polen gegen die Vorsprünge der Kontaktplatten gedrückt und dadurch sicher kontaktiert und in Position gehalten. Gemäß einer vorteilhaften Weiterbildung sind dabei von außen auf die beiden Stirnseiten der Rundzellenstapelreihe drückende Spannmittel vorgesehen, so dass keine Zugstange oder dergleichen benötigt werden, welche im Bereich der Rundzellenstapelreihe Raum benötigen. Es können jedoch auch einzelne Rundzellenreihen durch Zugstangen ersetzt werden, um so die Gesamtbaugröße des gesamten Batteriemoduls zu reduzieren. Hier ist darauf zu achten; dass die Zugstangen aus nicht leitendem Material oder insbesondere an den Zugpunkten ausreichend isoliertem Material besteht. Als geeignet, auch wegen des geringen Gewichts, haben sich dabei CFK- oder GFK-Gewindestangen erwiesen.

Alternativ oder ergänzend zu den Spannmitteln könnte zur Fixierung der Einzelteile des Batteriemoduls auch eine Aufnahme bzw. Halterung vorgesehen sein, in der die zu den Rundzellenstapeln gruppierte Rundzellen angeordnet bzw. gehaltert sind, um die Rundzellen sowie die Kontaktplatten in ihrer Lage festzulegen.

Die als Federnoppenbleche ausgebildeten Kontaktplatten gemäß des dritten Aspekts der Erfindung erhöhen dabei gegenüber den Kontaktplatten des ersten Aspekts der Erfindung noch die Spannkraft so das eine Verdrehsicherheit der Einzelzelle und eine Kontaktsicherheit auch bei Verzug des gesamten Blockes erfolgt. Zudem kann die Länge der Rundzellenstapelreihe durch die erhöhte Spannkraft ohne Zellschädigung je nach Zellgröße auf 10 - 12 Rundzellenstapel erhöht werden.

Bevorzugt weist die Aufnahme einen vorzugsweise flachen, geschlossenen oder mit Öffnungen versehenen Boden und zwei damit fest verbundene oder einstückige Flanken auf, die sich längs des Bodens in Stapelreihenrichtung als Längswände oder Längswandabschnitte erstrecken. Entspricht der Innenabstand der beiden Flanken dabei einem Vielfachen des Durchmessers einer Rundzelle, nämlich der Anzahl der in der untersten Lage der in den Rundzellenstapeln auf dem flachen Boden aufliegenden Rundzellen, so gelingt auf einfache Weise eine Lagefestlegung der Rundzellen, insbesondere im Zusammenwirken mit den auf die beiden Enden der Rundzellenstapelreihe drückenden Spannmitteln.

Weitere Lagen an Rundzellen können direkt auf der jeweils darunter liegenden Lage Rundzellen aufliegen, so dass sich die Rundzellen einer Lage gegenüber der Rundzelle der direkt darunter liegenden Lage um einen halben Durchmesser zur Seite hin versetzt anordnen.

Damit gelingt nicht nur eine weitergehende Lagefixierung der Rundzellen, sondern auch eine einfach Bestückung der Aufnahme mit den Rundzellen, welche nahezu wie Schüttgut eingefüllt werden können und sich zwangsweise selber in der gewünschten Position ausrichten, wobei sich die unterste Lage und jede zweite der darauf liegenden Lagen seitlich an den Flanken abstützen.

Die Spannmittel, also beispielsweise die längs durch das Batteriepack und durch entsprechende Bohrungen in den Polplatten durchgeführten Zugstangen können dann auf beide Polplatten wirken, etwa über außen auf den Polplatten aufliegende Isolierplatten. Dadurch wird die Klemmkraft auf den gesamten Querschnitt der Rundzellenstapel verteilt.

Sind die beiden Polplatten dagegen gegenüber der Aufnahme in Stapelreihenrichtung beweglich, aber über von außen auf die Polplatten drückende Spannmittel an der Aufnahme festlegbar, etwa jeweils über in Gewindebohrungen einer Außenquerwand der Aufnahme eingeschraubte, auf die Polplatte oder eine außen auf die Polplatte gelegte Isolierung drückende Druckschrauben, so steht neben den Flanken eine weitere Seitenwand zur Verfügung, um beim Bestücken der Aufnahme mit den Rundzellen eines an eine der Polplatten anschließenden Rundzellenstapels als Anschlag zu dienen. Dadurch wird das Bestücken der Aufnahme mit den Rundzellen weiter vereinfacht: Die der Polplatte und dem ersten Rundzellenstapel zwischengeordnete Kontaktplatte kann vor dem Einfüllen der Rundzelle des ersten Rundzellenstapels einfach lose auf die Polplatte gelegt werden. Nach dem Einfüllen der Rundzellen des ersten Rundzellenstapels können die beiden den ersten und den zweiten Rundstellenstapel zwischengeordneten Kontaktplatten ebenfalls lose eingelegt werden, so dass dort erneut ein Anschlag für das Einfüllen der Rundzellen des zweiten Rundzellenstapels zur Verfügung steht usw.

Es wäre ebenfalls denkbar, eine der Polplatten ortsfest in der Aufnahme anzuordnen und die Spannmittel nur auf die andere, gegenüber der Aufnahme in Stapelreihenrichtung verschiebliche Polplatte wirken zu lassen. Die dem Rundzellenstapel zwischengeordneten Kontaktplatten können völlig lose in die Aufnahme eingelegt werden, was eine besonders einfache Gestaltung der Aufnahme mit flachen Boden- und Seitenwänden erlaubt. Es wäre jedoch auch denkbar, die Aufnahme an den entsprechenden Positionen mit Schlitzen oder dergleichen zu versehen, in die die Kontaktplatten beim Zusammenbau eingeschoben werden, so dass zwar eine gewisse grobe Lagefixierung der Kontaktplatte erreicht wird, um so für das Bestücken mit den Rundzellen einzelne Fächer für die Rundzellenstapel bereitzustellen, ein Zusammenklemmen der fertigen Rundzellenstapelreihe aber weiterhin möglich ist.

Vorteilhaft ist ferner ein auf die Aufnahme passender Deckel vorgesehen, welcher zur Bestückung der Aufnahme abgenommen werden kann und mit der Aufnahme ein völlig geschlossenes oder zumindest boden- ober- und längsseitig geschlossenes Gehäuse bildet, aus dem lediglich die nötigen elektrischen Anschlussleitungen herausgeführt sind oder welches mit entsprechenden Anschlüssen versehen ist. Damit lassen sich sämtliche stromführenden Teile des Batteriemoduls isoliert im Gehäuse kapseln und die Rundzellen auch deckseitig festlegen, so dass auch eine Kippbewegung des Batteriemoduls oder ein Überkopfeinbau unkritisch sind, sofern die Aufnahme oder der Deckel an den Stirnseiten entsprechende Querwände aufweisen. An den Querwänden könnten sich dann wiederum die Spannmittel abstützen, die auf die Polplatte drücken. Es wäre auch denkbar, eine der Polplatten einstückig mit einer Querwand auszubilden, etwa mit einer außenseitigen Isolierbeschichtung, und mit den Spannmitteln lediglich auf die andere, gegenüber dem Gebäude bewegliche Polplatte zu drücken, wobei sich die Spannmittel dann an der gehäusefesten, anderen Querwand abstützen können.

Ebenfalls denkbar wäre es, die Aufnahme nur zu Montagezwecken zu verwenden. D.h., dass die Aufnahme nach dem korrekten Anordnen der Rundzellen in der Aufnahme und der Kontaktplatten und einem anschließenden Verspannen des Batteriemoduls wieder abgenommen wird.

Anhand der beiliegenden Figuren wird eine vorteilhafte Ausführungsform der Erfindung näher erläutert. Es zeigen:
- Figur 1: eine Explosionsdarstellung eines Batteriemoduls gemäß einer Ausführungsform der Erfindung, jedoch ohne Gehäuse und mit lediglich angedeuteten Spannmitteln;
- Figur 2: Einzelheit II in Figur 1;
- Figur 3: eine Ansicht der in den Figuren 1 und 2 gezeigten Ausführungsform der Erfindung mit einer Aufnahme eines Gehäuses und von außen auf Polplatten drückenden Spannmitteln; und
- Figur 4: eine weitere Ausführungsform der Erfindung mit durch das Batteriemodul geführte Zugstangen aufweisenden Spannmitteln,
- Figur 5: eine Explosionsdarstellung eines Batteriemoduls gemäß einer weiteren Ausführungsform der Erfindung, jedoch ohne Gehäuse und mit lediglich angedeuteten Spannmitteln;
- Figur 6: Einzelheit II in Figur 1;
- Figur 7: eine die Zuordnung von Kontaktvorsprüngen zu Rundzellen des in Fig. 1 gezeigten Batteriemoduls verdeutlichende Prinzipdarstellung;
- Figur 8 und 8a: eine Kontaktplatte einer weiteren Ausführungsform der Erfindung, mit durch das Batteriemodul geführte Zugstangen von beiden Seiten, und
- Fig. 9 und 10: beide Endkontaktplatten dieser Ausführungsform der Erfindung mit ihren jeweils einem anschließenden Rundzellenstapel zugewandten Seiten und einer lediglich zu Anschauungszwecken eingezeichneten Rundzelle.

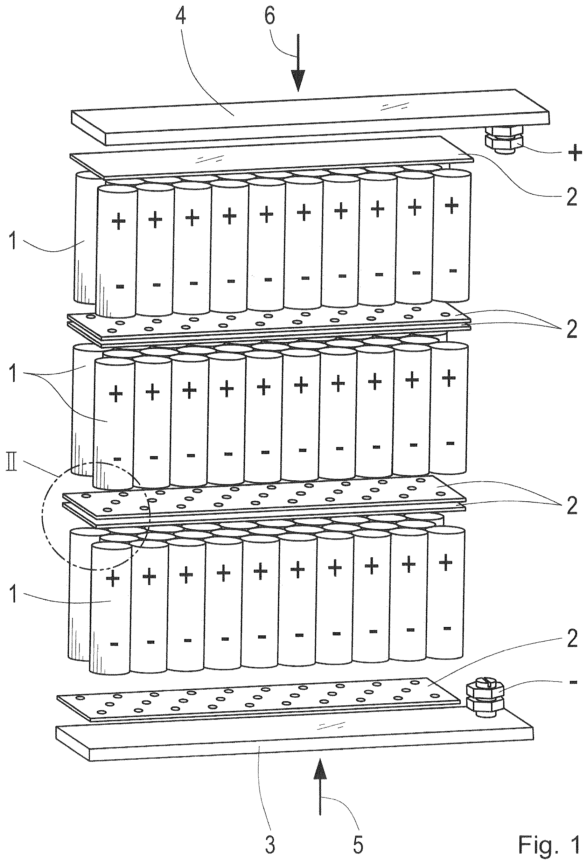

Das in der Figur 1 gezeigte Batteriemodul weist 87 Lithium-Ionen-Rundzellen auf, die alle mit gleichgerichteter Polung zu drei Rundzellenstapeln á 29 Rundzellen gruppiert angeordnet und mit den Bezugszeichen 1 versehen sind. Die Rundzellenstapel sind wiederum in Reihe aneinander angeordnet, wobei zwischen zwei aneinander grenzenden Rundzellenstapel jeweils zwei Kontaktplatten 2 zwischengeordnet sind. An den beiden Stirnenden der Rundzellenstapelreihe befindet sich jeweils eine weitere Kontaktplatte 2, sowie außenseitig darüberliegend jeweils eine Polplatte 3, 4, an der die Anschlussklemmen +, -, für die Stromabnahme vorgesehen sind. Auf die Polplatten 3, 4 wirken Spannmittel 5, 6, die in Fig. 1 lediglich schematisch durch einen Pfeil angedeutet sind, um das Batteriemodul zusammenzuspannen.

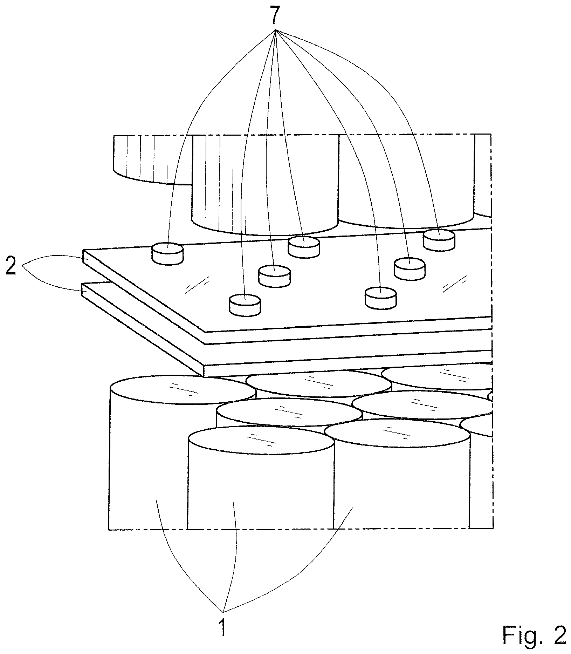

Die Rundzellen 1 weisen dabei eine zylindrische Form auf, wobei die beiden flachen Stirnseiten als Pole dienen, und sind in drei Lagen pro Rundzellenstapel angeordnet, wobei die Rundzellen der mittleren Lage um einen halben Durchmesser versetzt sind, so dass sich im jeweiligen Rundzellenstapel die dichtest mögliche Packung der Rundzellen 1 ergibt. Die Kontaktplatten 2 sind an ihren den Polen der Rundzellen 1 zugewandten Seiten mit Vorsprüngen 7 versehen, die insbesondere in der Figur 2 zu erkennen ist. Die Vorsprünge 7 befinden sich dabei auf Achsen, die jeweils durch eine der Rundzellen 1 pro Stapel verlaufen und drücken im zusammengebauten Zustand jeweils auf einen Rundzellenpol, so dass die drei koaxialen Rundzellen zu einer Rundzellenreihe in Reihenschaltung durchkontaktiert werden, die Rundzellen jedes Rundzellenstapels dagegen über die Vorsprünge und die sich zwischen den Vorsprüngen befindenden flachen Abschnitte der Kontaktplatten 2 parallel verbunden werden.

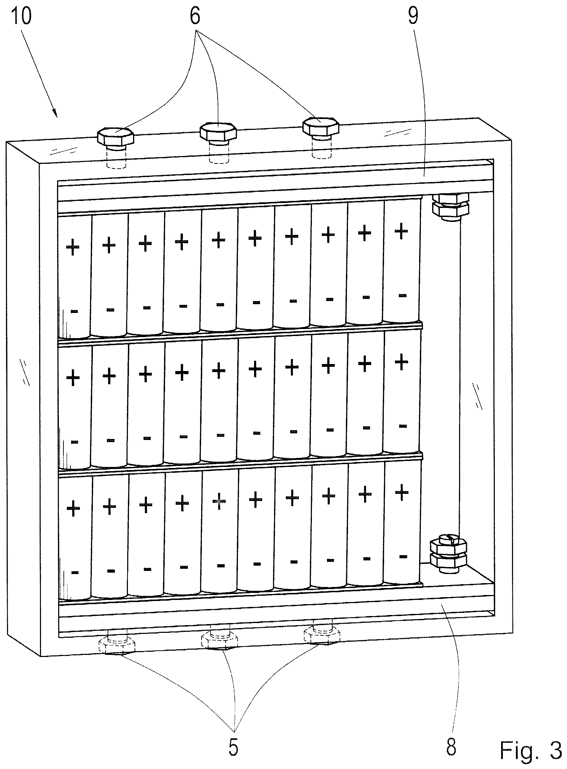

In der Explosionsdarstellung der Figur 1 ist von dem Batteriemodul lediglich die Rundzellenstapelreihe gezeigt, welche aus den Rundzellen 1, den Kontaktplatten 2 und den Polplatten 3, 4 besteht. Figur 3 zeigt das gesamte Batteriemodul mit der in einer Aufnahme 10 aufgenommenen Rundzellenstapelreihe und mit als Druckschrauben 5, 6 ausgebildeten Spannmitteln 5, 6. Die Aufnahme weist dabei einen Boden, sowie Längs- und Querwände auf. Die Druckschrauben 5, 6 sind in Gewindebohrungen in den Querwänden eingedreht und drücken auf Isolierplatten 8, 9, welche außen auf den Polplatten 3, 4 liegen.

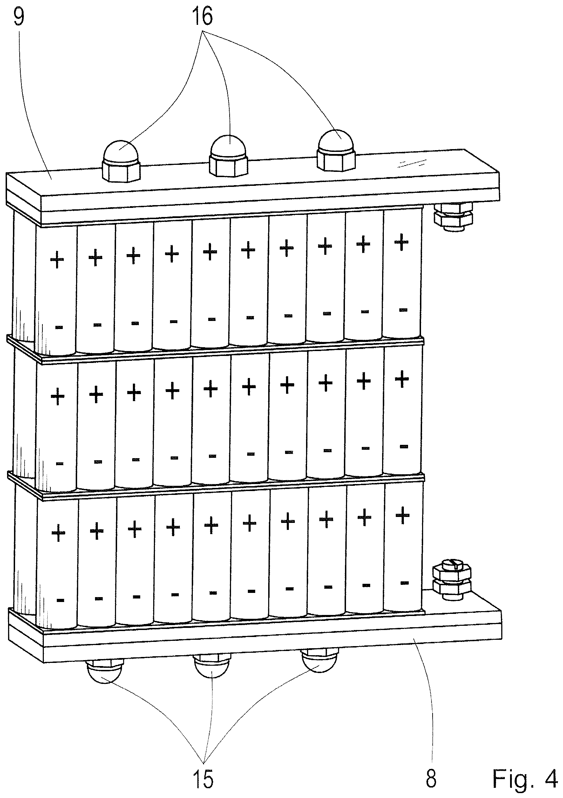

Figur 4 zeigt ein Batteriemodul gemäß einer alternativen Ausführungsform. Dort sind gegenüber dem in den vorhergehenden Figuren gezeigten Batteriemodul in der mittleren Lage der Rundzellenstapel drei Rundzellenreihen weggelassen worden. Anstatt dessen sind dort Gewindebolzen bzw. Zugstangen hindurchgeführt, welche zusammen mit Muttern 15, 16 als Spannmittel zum Verspannen der Rundzellenstapelreihe dienen. Die Muttern drücken auf Isolierplatten 8, 9, die außenseitig auf den Polplatten 3, 4 aufliegen.

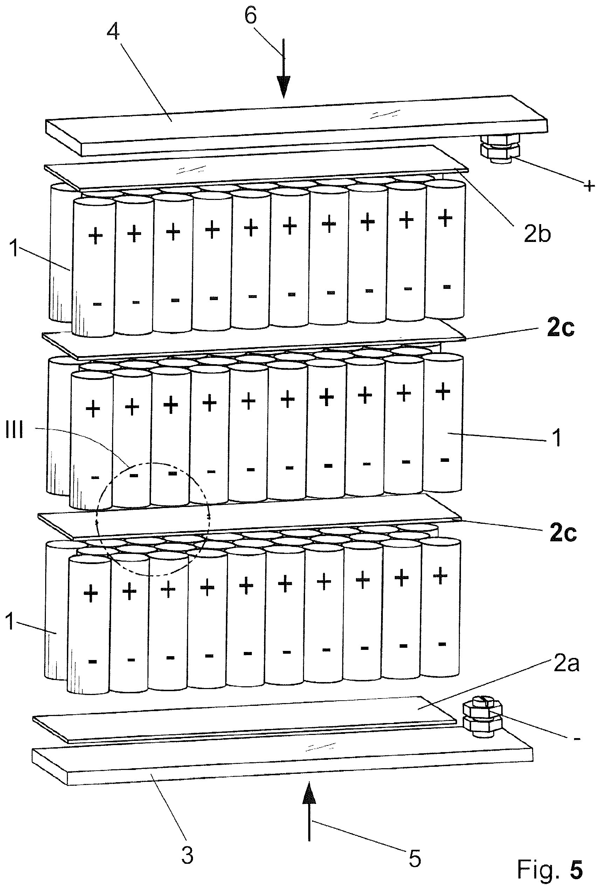

Das in der Figur 5 gezeigte Batteriemodul weist Lithium-Ionen-Rundzellen in einer der Figur 1 entsprechenden Form und Anordnung auf. Die Rundzellenstapel sind wiederum in Reihe aneinander angeordnet, wobei Zwischen zwei aneinander grenzenden Rundzellenstapeln ist jeweils nur eine Kontaktplatte 2c zwischengeordnet. An den beiden Stirnenden der Rundzellenstapelreihe befindet sich jeweils eine Endkontaktplatte 2a, 2b sowie außenseitig darüberliegend jeweils eine Polplatte 3, 4, an der die Anschlussklemmen +, -, für die Stromabnahme vorgesehen sind. Auf die Polplatten 3, 4 wirken Spannmittel 5, 6, die in Fig. 5 lediglich schematisch durch einen Pfeil angedeutet sind, um das Batteriemodul zusammenzuspannen.

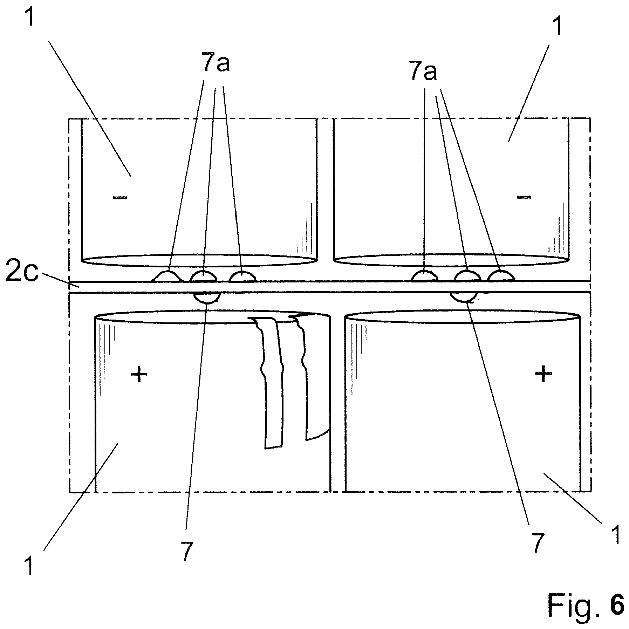

Die Kontaktplatten 2c und die in Fig. 5 obere Endkontaktplatte 2b sind an ihren den Pluspolen der Rundzellen 1 zugewandten Seiten mit Vorsprüngen 7 versehen, die in Fig. 5 aus Übersichtlichkeitsgründen nicht eingezeichnet wurden, aber insbesondere in der Figur 6 zu erkennen sind. Die Vorsprünge 7 befinden sich dabei jeweils auf den durch eine der Rundzellen 1 pro Stapel verlaufenden Achsen und drücken im zusammengebauten Zustand jeweils auf einen Rundzellenpluspol, so dass die Rundzellenpluspole jedes Rundzellenstapels über die Vorsprünge 7 und die sich zwischen den Vorsprüngen befindenden flachen Abschnitte der Kontaktplatten 2 und der Endkontaktplatte 2b parallel verbunden werden.

An ihrer den Minuspolen der Rundzellen 1 zugewandten Seiten sind die Kontaktplatten 2c und die in Figur 5 untere Endkontaktplatte 2a dagegen nicht jeweils mit einem mittigen Vorsprung 7 pro Rundzelle versehen, sondern mit drei um den mittigen Vorsprung 7 auf dessen Gegenseite mit jeweils gleichem radialen Abstand herum gleichmäßig verteilten Vorsprüngen 7a, wie ebenfalls aus Fig. 6 hervorgeht und in Fig. 1 nicht eingezeichnet ist. Die jeweils drei Vorsprünge 7a pro Rundzellenminuspol schützen die in der Mitte relativ weichen Minuspole vor Beschädigungen und lassen sich von der Gegenseite her in die Kontaktplatten 2 einprägen, während in der Mitte dazwischen noch Platz bleibt, um die die Pluspole kontaktierenden Vorsprünge 7 einzuprägen, die in Gegenrichtung zu den Vorsprüngen 7a abstehen. Insgesamt werden so jeweils die drei koaxialen Rundzellen zu einer Rundzellenreihe in Reihenschaltung durchkontaktiert.

In der Explosionsdarstellung der Figur 5 sind die als Druckschrauben 5, 6 ausgebildeten Spannmittel 5, 6 lediglich angedeutet. Das Batteriezellenmodul weist jedoch eine Aufnahme auf, welche dabei einen Boden, sowie Längs- und Querwände hat. Die Druckschrauben 5, 6 sind in Gewindebohrungen in den Querwänden eingedreht und drücken auf Isolierplatten, welche wiederum von außen auf den Polplatten 3, 4 der Aufnahme liegen.

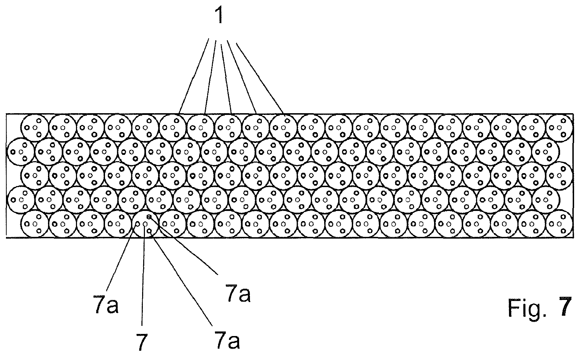

Figur 7 zeigt skizzenartig, wie die Kontaktvorsprünge 7 bzw. 7a zueinander und zu den Rundzellen 1 angeordnet sind. Auch wenn dort deutlich mehr Rundzellen 1 pro Rundzellenstapel eingezeichnet sind (20 x 5) als in der Figur 5 (2 x 10 + 1 x 9), so ist doch die Lage der einer Rundzellenreihe zugeordneten drei konzentrischen Vorsprünge 7a gegenüber dem jeweiligen, mittigen, auf der Rundzellenreihenachse angeordneten Vorsprung 7 gut zu erkennen.

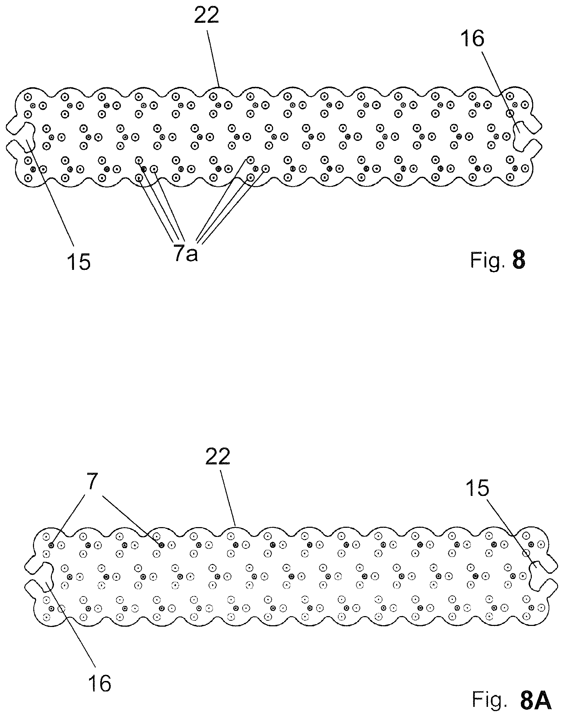

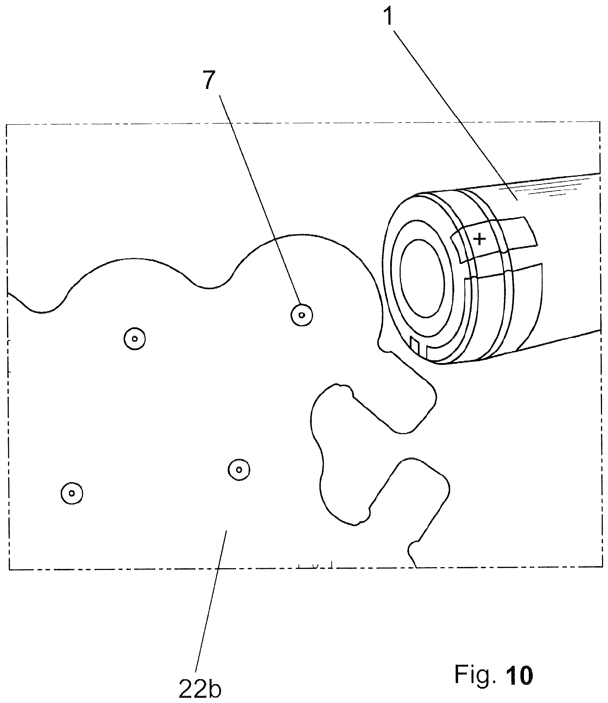

Die weiteren Figuren 8, 8A, 9 und 10 zeigen eine Kontaktplatte 22 und die beiden Endkontaktplatten bzw. endseitigen Kontaktplatten 22a, 22b eines Batteriemoduls gemäß einer alternativen Ausführungsform, welche, wie schon bei der in der vorhergehenden Figur gezeigten Ausführungsform aus Kupferblech ausgebildet sind. Figur 8 zeigt eine der jeweils zwischen zwei der Rundzellenstapeln angeordneten Kontaktplatten 22 mit ihrer den Minuspolen zugewandten Seite, also mit ihrer in einer der Figur 5 entsprechenden Darstellung nach oben gerichteten Seite, Figur 8A mit ihrer in dieser Darstellung nach unten gerichteten, den Pluspolen zugewandten Seite.

In Fig. 8 und 8A erkennt man jeweils die auf den Rundzellenreihenachsen als zu den Pluspolen hin vorspringende Noppen ins Blech eingeprägten Kontaktvorsprünge 7, sowie die in Gegenrichtung um die Vorsprünge 7 herum ebenfalls ins Blech eingeprägten, den Minuspolen zugewandten Kontaktvorsprünge 7a. Sowohl die mittigen Kontaktvorsprünge 7, als auch die konzentrisch darum herum angeordneten Kontaktvorsprünge 7a sind dabei in beiden Ansichten zu erkennen, wobei in Fig. 8 die konzentrisch angeordneten Kontaktvorsprünge 7a aus der Blattebene herausragen und die mittigen Kontaktvorsprünge in die Blattebene hinein geprägte Vertiefungen sind. In der Fig. 8A stehen dagegen die mittigen Kontaktvorsprünge aus der Blattebene heraus und die konzentrischen Vorsprünge ragen in die Blattebene hinein.

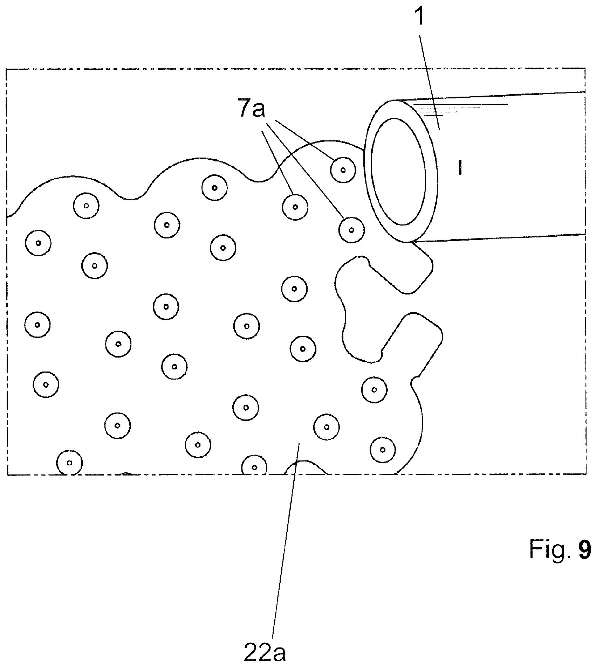

Figur 9 zeigt die in einer der Figur 5 entsprechenden Darstellung untere, den Minuspolen des untersten Rundzellenstapels zugewandte Endkontaktplatte 22a, in die lediglich die konzentrischen Noppen 7a zur Kontaktierung der Minuspole eingeprägt sind. Die Figur 6 zeigt eine der Figur 5 entsprechende Darstellung der obersten Endkontaktplatte 22b mit ihrer den Pluspolen des obersten Rundzellenstapels zugewandten Seite, von der die mittigen Kontaktnoppen 7 aus der Blattebene heraus vorspringen. Die Kontaktplatte 22 und die Endkontaktplatten 22a, 22b weisen jeweils seitliche Ausnehmungen 15, 16 auf, durch die Zuganker geführt werden können, um das Batteriemodul gemäß dieser Ausführungsform zusammen zu spannen.

Varianten und Abwandlungen der gezeigten Ausführungsformen sind möglich, ohne den Rahmen der Erfindung zu verlassen.

## Patentansprüche

1. Batteriemodul, mit einer Vielzahl Rundzellen (1) gleicher Abmessungen, Soll-Ladekapazität und -spannung, die zu einer Reihe von Rundzellenstapeln gruppiert sind, welche Rundzellenstapel in Reihe hintereinander angeordnet sind und welche Rundzellenstapel alle aus einer gleichen Mehrzahl Rundzellen (1) bestehen, die in jedem Rundzellenstapel achsparallel zur Stapelreihenrichtung mit in Stapelreihenrichtung gleicher Position neben- und aufeinander liegen, wobei
benachbarten Rundzellenstapeln zwischengeordnete Kontaktplatten (2; 2c; 22) und an den in Stapelreihenrichtung gelegenen Enden der Rundzellenstapelreihe endseitige Kontaktplatten (2; 2a, 2b; 22a, 22b) vorgesehen sind, welche die Rundzellen (1) jedes Rundzellenstapels an ihren in Stapelreihenrichtung gelegenen Polen elektrisch parallel verbinden, und wobei
sämtliche Rundzellen (1) so angeordnet sind, dass alle gleichen elektrischen Pole in gleiche Richtung zeigen und eine der Mehrzahl von Rundzellen (1) pro Rundzellenstapel entsprechende Mehrzahl fluchtender Rundzellenreihen bilden, deren Rundzellen (1) über die zwischengeordneten Kontaktplatten (2; 2c; 22) jeweils elektrisch in Reihe verbunden sind,
**dadurch gekennzeichnet, dass**
zumindest die zwischengeordneten Kontaktplatten (2; 2c; 22) zum Kontaktieren der Pole der Rundzellen (1) Vorsprünge (7; 7, 7a) aufweisen und an den Vorsprüngen (7; 7, 7a) und in flachen Abschnitten zwischen den Vorsprüngen (7; 7, 7a) elektrisch leitend sind, wobei die Vorsprünge (7; 7, 7a) auf die Pole drücken, mit den Polen aber nicht einstückig verbunden sind, und wobei
an den beiden Enden der Rundzellenstapelreihe jeweils eine Polplatte (3, 4) außen auf der dortigen, endseitigen Kontaktplatte (2; 2a, 2b; 22a, 22b) aufliegt, welche Polplatten (3, 4) gegenüber den Kontaktplatten (2; 2a, 2b, 2c; 22a, 22b, 22) dickwandiger sind, und welche die die Pole des Batteriemoduls bildenden Enden der Rundzellenstapelreihe bilden, und wobei
die Vorsprünge (7) entweder identische Abmessungen aufweisen und an den Kontaktplatten (2) an den den Achsen der Rundzellenreihen entsprechenden Positionen vorgesehen sind, wobei die Vorsprünge (7) jeweils einen Pol einer Rundzelle (1) oder beide einander zugewandten Pole zweier aneinander anschließender Rundzellen einer Rundzellenreihen kontaktieren, so dass alle Rundzellenpole über einen der Vorsprünge (7) kontaktiert sind,
oder
die Pluspole eines Rundzellenstapels kontaktierende Kontaktplatten (2b, 2c; 22b, 22) auf ihren den Pluspolen zugewandten Seiten an den Achsen der Rundzellenreihen entsprechenden Positionen Vorsprünge (7) identischer Abmessungen aufweisen, die jeweils einen Pluspol einer Rundzelle (1) kontaktieren, und die Minuspole eines Rundzellenstapels kontaktierenden Kontaktplatten (2a, 2c; 22a, 22) auf ihren den Minuspolen zugewandten Seiten um die den Achsen der Rundzellenbereiche entsprechenden Positionen herum jeweils eine Mehrzahl, insbesondere drei Vorsprünge (7a) identischer Abmessungen aufweisen, die jeweils einen der Minuspole einer Rundzelle (1) kontaktieren.

2. Batteriemodul nach Anspruch 1, **dadurch gekennzeichnet, dass** die Vorsprünge (7) identische Abmessungen aufweisen und an den Kontaktplatten (2) an den den Achsen der Rundzellenreihen entsprechenden Positionen vorgesehen sind, wobei die Vorsprünge (7) jeweils einen Pol einer Rundzelle (1) kontaktieren, und wobei
den benachbarten Rundzellenstapeln jeweils ein Paar als Metallblechplatten, insbesondere Kupferblechplatten (2) ausgebildeter Kontaktplatten (2) zwischengeordnet ist, wobei die Vorsprünge (7) als in die Kontaktplatten (2) eingeprägte Noppen (7) ausgeformt sind, wobei vorzugsweise auch die beiden endseitigen Kontaktplatten (2) als solche Metallblechplatten, insbesondere Kupferblechplatten (2) mit eingeformten Noppen (7) ausgebildet sind, und wobei sämtliche Kontaktplatten (2) vorzugsweise identisch sind.

3. Batteriemodul nach Anspruch 1, **dadurch gekennzeichnet, dass** die Vorsprünge identische Abmessungen aufweisen und an den Kontaktplatten an den den Achsen der Rundzellenreihen entsprechenden Positionen vorgesehen sind, wobei die Vorsprünge jeweils beide einander zugewandten Pole zweier aneinander anschließender Rundzellen einer Rundzellenreihen kontaktierenden, und wobei
benachbarten Rundzellenstapeln jeweils eine als Platine ausgebildete Kontaktplatte oder ein Paar als Platinen ausgebildete Kontaktplatten zwischengeordnet ist bzw. sind, und insbesondere auch die an den in Stapelreihenrichtung gelegenen Enden der Rundzellenstapelreihe vorgesehenen, endseitigen Kontaktplatten als Platine ausgebildet sind, wobei die Kontaktplatten an den den Achsen der Rundzellenreihen entsprechenden Positionen Durchgangsbohrungen aufweisen, und wobei die Vorsprünge als in die Durchgangsbohrungen gesteckte, vorzugsweise aus Kupfer bestehende Hülsen bzw. Bolzen oder als dort gesetzte Lötpunkte ausgebildet sind, wobei über Leiterbahnen auf der jeweiligen Kontaktplatte jeder der Vorsprünge einer Kontaktplatte mit jedem anderen Vorsprung der Kontaktplatte parallel verbunden ist, und wobei sämtliche Kontaktplatten vorzugsweise identisch sind.

4. Batteriemodul nach Anspruch 1, **dadurch gekennzeichnet, dass** die Pluspole eines Rundzellenstapels kontaktierende Kontaktplatten (2b, 2c; 22b, 22) auf ihren den Pluspolen zugewandten Seiten an den Achsen der Rundzellenreihen entsprechenden Positionen Vorsprünge (7) identischer Abmessungen aufweisen, die jeweils einen Pluspol einer Rundzelle (1) kontaktieren, und die Minuspole eines Rundzellenstapels kontaktierenden Kontaktplatten (2a, 2c; 22a, 22) auf ihren den Minuspolen zugewandten Seiten um die den Achsen der Rundzellenbereiche entsprechenden Positionen herum jeweils eine Mehrzahl, insbesondere drei Vorsprünge (7a) identischer Abmessungen aufweisen, die jeweils einen der Minuspole einer Rundzelle (1) kontaktieren, wobei den benachbarten Rundzellenstapeln jeweils eine als Metallblechplatte, insbesondere Kupferblechplatte (2; 22) ausgebildete Kontaktplatte (2; 22) zwischengeordnet ist, und an den in Stapelreihenrichtung gelegenen Enden der Rundzellenstapelreihe jeweils eine als Metallblechplatte, insbesondere Kupferblechplatte (2a; 2b; 22a; 22b) ausgebildete, endseitige Kontaktplatte (2a; 2b; 22a; 22b) vorgesehen ist, wobei die Vorsprünge (7; 7a) als in die Kontaktplatten (2; 22) eingeprägte Noppen (7, 7a) ausgeformt sind, wobei vorzugsweise auch die beiden endseitige Kontaktplatten (2a; 2b; 22a; 22b) mit eingeformten Noppen (7; 7a) ausgebildet sind, und wobei sämtliche zwischengeordneten Kontaktplatten (2; 22) vorzugsweise identisch sind.

5. Batteriemodul nach Anspruch 4, **dadurch gekennzeichnet, dass** die den benachbarten Rundzellenstapeln zwischengeordneten Kontaktplatten (2; 22) jeweils auf ihren den Pluspolen des einen Rundzellenstapels zugewandten Seiten die mittigen Vorsprünge (7) aufweisen und auf ihren den Minuspolen des anderen Rundzellenstapels zugeordneten Seiten die Mehrzahlen von um die Achse der Rundzellenreihen herum angeordneten Vorsprüngen (7a), wobei jede der endseitigen Kontaktplatten (2a; 2b; 22a; 22b), vorzugsweise nur die mittigen Vorsprünge (7) oder die Mehrzahlen von Vorsprüngen (7a) aufweist.

6. Batteriemodul nach einem der vorhergehenden Ansprüche 4 oder 5, **dadurch gekennzeichnet, dass** die Vorsprünge (7a) jeder einem Minuspol zugeordneter Mehrzahl von Vorsprüngen (7a) konzentrisch und umfangsseitig gleichmäßig verteilt um die zugeordnete Achse der jeweiligen Rundzellenreihe angeordnet sind.

7. Batteriemodul nach einem der vorhergehenden Ansprüche, **dadurch gekennzeichnet, dass** es zumindest auf eines der beiden Enden der Rundzellenstapelreihe wirkende Spannmittel (5, 6; 15, 16) aufweist, um eine in Stapelreihenrichtung wirkende Klemmkraft auf die Rundzellenstapelreihe auszuüben.

8. Batteriemodul nach Anspruch 7, **dadurch gekennzeichnet, dass** die Spannmittel (5, 6) auf die Polplatten (3, 4) wirken.

9. Batteriemodul nach einem der vorhergehenden Ansprüche, **dadurch gekennzeichnet, dass** die Rundzellen (1) in einer Aufnahme (10) zu der Reihe von Rundzellenstapeln gruppiert angeordnet sind.

10. Batteriemodul nach Anspruch 9, **dadurch gekennzeichnet, dass** die Aufnahme (10) einen Boden und zwei damit fest verbundene, sich in Längsrichtung entlang des Bodens und nach oben erstreckende Längsflanken aufweist.

11. Batteriemodul nach einem der vorhergehenden Ansprüche, **dadurch gekennzeichnet, dass** die Rundzellenstapel aufeinander liegende Lagen von Rundzellen (1) aufweisen, wobei die Rundzellen (1) jeder dieser Rundzellenlagen direkt auf den Rundzellen (1) der jeweils darunter befindlichen Rundzellenlage aufliegen.

12. Batteriemodul nach einem der Ansprüche 9 bis 11, **dadurch gekennzeichnet, dass** ein auf die Aufnahme (10) passender, abnehmbarer, insbesondere aufklappbarer Deckel vorgesehen ist, welcher zusammen mit der Aufnahme ein zumindest boden- ober- und längsseitig geschlossenes Gehäuse bildet, aus dem elektrisch mit den Polplatten (3, 4) verbundene Anschlussleitungen herausgeführt sind oder welches elektrisch mit den Polplatten verbundene Anschlüsse aufweist.

13. Batteriemodul nach einem der vorhergehenden Ansprüche, **dadurch gekennzeichnet, dass** die den Rundzellenstapeln zwischengeordneten Kontaktplatten (2; 2c) und insbesondere auch die endseitigen Kontaktplatten (2a, 2b) lose zwischen die Rundzellenstapel eingefügt sind, insbesondere lose in die Aufnahme eingeschoben sind.

14. Batteriemodul nach einem der Ansprüche 9 bis 13, **dadurch gekennzeichnet, dass** die Aufnahme (10) an den Enden der beiden Längsflanken Querwände aufweist, an denen sich die von außen auf eines oder auf die beiden Enden der Rundzellenstapelreihe, bevorzugt auf die dortige Polplatte (3, 4) drückenden Spannmittel (5, 6) abstützen, wobei die dortige Polplatte (3, 4) in Stapelreihenrichtung beweglich in der Aufnahme (10) aufgenommen ist.

15. Batteriemodul nach einem der vorhergehenden Ansprüche 7 bis 13, **dadurch gekennzeichnet, dass** die Kontaktplatten (22), die Endkontaktplatten (22a, 22b) und die Polplatten Ausnehmungen (15; 16) aufweisen, durch die Zuganker geführt sind, welche mit den insbesondere als Muttern ausgebildeten Spannmitteln die Klemmkraft auf die Rundzellenstapelreihe ausüben.

## Claims

1. A battery module, comprising a plurality of round cells (1) of identical dimensions, target charge capacity and voltage, which are grouped into a series of round cell stacks, which round cell stacks are arranged one behind the other in a row and which round cell stacks all consist of an identical plurality of round cells (1) which lie in each round cell stack axis-parallel to the stack row direction, adjacent and on top of each other in identical position in the stack row direction, wherein
contact plates (2; 2c; 22) interposed between adjacent round cell stacks are provided, as well as end-side contact plates (2; 2a, 2b; 22a, 22b) at the ends of the round cell stack row disposed in the stack row direction, which connect the round cells (1) of each round cell stack in an electrically parallel manner at their poles disposed in the stack row direction, and wherein
all the round cells (1) are arranged in such a way that all identical electrical poles face in the same direction and form a plurality of aligned round cell rows corresponding to the plurality of round cells (1) per round cell stack, the round cells (1) of each round cell row are respectively electrically connected in series via the interposed contact plates (2; 2c; 22),
**characterized in that**
at least the interposed contact plates (2; 2c; 22) comprise protrusions (7; 7, 7a) for contacting the poles of the round cells (1) and are electrically conductive at the protrusions (7; 7, 7a) and in the flat sections between the protrusions (7; 7, 7a), wherein the protrusions (7; 7, 7a) press on the poles, but are not integrally connected to the poles, and wherein,
at the two ends of the round cell stack row, a respective pole plate (3, 4) rests on the outside on the end-side contact plate (2; 2a, 2b; 22a, 22b) there, which pole plates (3, 4) are thicker-walled as compared to the contact plates (2; 2a, 2b, 2c; 22a, 22b, 22), and which form the ends of the round cell stack row forming the poles of the battery module, and wherein
the protrusions (7) have either identical dimensions and are provided on the contact plates (2) at the positions corresponding to the axes of the round cell rows, wherein the protrusions (7) each contact a pole of a round cell (1) or both mutually facing poles of two adjoining round cells of a round cell row, so that all round cell poles are contacted via one of the protrusions (7),
or
the contact plates (2b, 2c; 22b, 22), which contact the plus poles of a round cell stack, comprise respective protrusions (7) of identical dimensions on their sides facing the plus poles on the axes of the round cell rows, which protrusions each contact a plus pole of a round cell (1), and the contact plates (2a, 2c; 22a, 22), which contact the minus poles of a round cell stack, respectively comprise a plurality, especially three, protrusions (7a) of identical dimension on their sides facing the minus poles around the positions corresponding to the axes of the round cell regions, which protrusions each contact one of the minus poles of a round cell (1).

2. A battery module according to claim 1, **characterized in that** the protrusions (7) have identical dimensions and are provided on the contact plates (2) at the positions corresponding to the axes of the round cell rows, wherein the protrusions (7) each contact one pole of a round cell (1), and wherein
a pair of contact plates (2), which are in the form of sheet metal plates, in particular sheet copper plates (2), are interposed between the adjoining round cell stacks, wherein the protrusions (7) are formed as nubs (7) impressed into the contact plates (2), wherein preferably also the two end-side contact plates (2) are formed as such sheet metal plates, especially sheet copper plates (2) with impressed nubs (7), and wherein all of the contact plates (2) are preferably identical.

3. A battery module according to claim 1, **characterized in that** the protrusions have identical dimensions and are provided on the contact plates at the positions corresponding to the axes of the round cell rows, wherein the protrusions each contact both mutually facing poles of two mutually adjoining round cells of a round cell row, and wherein
a respective contact plate formed as a printed circuit board or a pair of contact plates formed as printed circuit boards is or are interposed between adjoining round cell stacks, and especially also the end-side contact plates, which are provided at the ends of the round cell stack row disposed in the stack row direction, are formed as printed circuit boards, wherein the contact plates comprise through-bores at the positions corresponding to the axes of the round cell rows, and wherein the protrusions are formed as sleeves or bolts, preferably consisting of copper, and are inserted into the through-bores, or as solder points placed there, wherein each of the protrusions of a contact plate is connected in parallel to each other protrusion of the contact plate via conductor tracks on the respective contact plate, and wherein all contact plates are preferably identical.

4. A battery module according to claim 1, **characterized in that** the contact plates (2b, 2c; 22b, 22) contacting the plus poles of a round cell stack have protrusions (7) of identical dimensions on their sides facing the plus poles on the axes of the round cell rows, which each contact a plus pole of a round cell (1), and the contact plates (2a, 2c; 22a, 22) contacting the minus poles (1) of a round cell stack comprise a plurality, in particular three, protrusions (7a) of identical dimensions on their sides facing the minus poles around positions corresponding to the axes of the round cell regions, which each contact one of the minus poles of a round cell (1), wherein
a respective contact plate (2; 22), which is formed as a sheet metal plate, especially a sheet copper plate (2; 22), is interposed between adjoining round cell stacks, and at the ends of the round cell stack row situated in the stack row direction a respective end-side contact plate (2a; 2b; 22a; 22b) is provided, which is formed as a sheet metal plate, especially a sheet copper plate (2a; 2b; 22a; 22b), wherein the protrusions (7; 7a) are formed as nubs (7, 7a) impressed into the contact plates (2; 22), wherein preferably also the two end-side contact plates (2a; 2b; 22a; 22b) are formed with impressed nubs (7; 7a), and wherein all interposed contact plates (2; 22) are preferably identical.

5. A battery module according to claim 4, **characterized in that** the contact plates (2; 22) interposed between the adjacent round cell stacks each have the central protrusions (7) on their sides facing the plus poles of the one round cell stack, and on their sides assigned to the minus poles of the other round cell stack (7a) the pluralities of protrusions (7a) arranged around the axis of the round cell rows, wherein each of the end-side contact plates (2a; 2b; 22a; 22b) preferably only comprises the central protrusions (7) or the pluralities of protrusions (7a).

6. A battery module according to one of the preceding claims 4 or 5, **characterized in that** the protrusions (7a) of each of a plurality of protrusions (7a) assigned to a minus pole are distributed concentrically and circumferentially uniformly around the associated axis of the respective round cell row.

7. A battery module according to one of the preceding claims, **characterized in that** it comprises at least one clamping means (5, 6; 15, 16) acting on one of the two ends of the round cell stack row in order to exert a clamping force acting in the stack row direction on the round cell stack row.

8. A battery module according to claim 7, **characterized in that** the clamping means (5, 6) act on the pole plates (3, 4).

9. A battery module according to one of the preceding claims, **characterized in that** the round cells (1) are arranged in a receptacle (10) in a grouped manner in relation to the row of round cell stacks.

10. A battery module according to claim 9, **characterized in that** the receptacle (10) has a base and two longitudinal flanks which are fixedly connected thereto and extend longitudinally along the base and upwards.

11. A battery module according to one of the preceding claims, **characterized in that** the round cell stacks comprise layers of round cells (1) which are stacked on top of each other, wherein the round cells (1) of each of these round cell layers lie directly on the round cells (1) of the respective round cell layer located underneath.

12. A battery module according to one of claims 9 to 11, **characterized in that** a detachable, in particular fold-open, cover adapted to the receptacle (10) is provided, which forms, together with the receptacle, a housing which is closed at least at the base, top and longitudinal sides, from which connecting lines that are electrically connected to the pole plates (3, 4) are guided to the outside or which has connections which are electrically connected to the pole plates.

13. A battery module according to one of the preceding claims, **characterized in that** the contact plates (2; 2c) interposed between the round cell stacks and, in particular, also the end-side contact plates (2a, 2b) are inserted loosely between the round cell stacks, especially pushed loosely into the receptacle.

14. A battery module according to one of claims 9 to 13, **characterized in that** the receptacle (10) has, at the ends of the two longitudinal flanks, transverse walls, on which the clamping means (5, 6) are supported which press from the outside against one or both ends of the round cell stack row, preferably the pole plate (3, 4) there, wherein the pole plate (3, 4) there is movably accommodated in the receptacle (10) in the stack row direction.

15. A battery module according to one of the preceding claims 7 to 13, **characterized in that** the contact plates (22), the end contact plates (22a, 22b) and the pole plates have recesses (15; 16) through which the tie rods are guided, which exert the clamping force on the round cell stack row with the clamping means especially formed as nuts.

## Revendications

1. Module de batterie comprenant une pluralité de cellules rondes (1) de mêmes dimensions, de même capacité de charge de consigne et de même tension de consigne, qui sont regroupées en une rangée de piles de cellules rondes, lesquels piles de cellules rondes sont disposées en série les unes derrière les autres, et lesquelles piles de cellules rondes se composent toutes d'une même pluralité de cellules rondes (1) qui sont placées les unes à côté des autres et les unes sur les autres dans chaque pile de cellules rondes parallèlement à l'axe par rapport à la direction de la rangée de piles et avec la même position dans la direction de la rangée de piles, dans lequel
des plaques de contact (2; 2c; 22) intercalées entre des piles de cellules rondes voisines et des plaques de contact d'extrémité (2; 2a, 2b; 22a, 22b) aux extrémités de la rangée de piles de cellules rondes, situées dans la direction de la rangée de piles, sont prévues qui relient électriquement en parallèle les cellules rondes (1) de chaque pile de cellules rondes au niveau de leurs pôles situés dans la direction de la rangée de piles, et dans lequel
toutes les cellules rondes (1) sont disposées de manière à ce que tous les pôles électriques égaux montrent dans la même direction et forment une pluralité de rangées de cellules rondes alignées qui correspond à la pluralité de cellules rondes (1) par pile de cellules rondes et dont les cellules rondes (1) sont reliées chacune électriquement en série par lesdites plaques de contact (2; 2c; 22) intercalées,
**caractérisé par le fait qu'**
au moins les plaques de contact (2; 2c; 22) intercalées comportent des saillies (7; 7, 7a) pour contacter les pôles des cellules rondes (1) et sont électriquement conductrices sur lesdites saillies (7; 7, 7a) et dans des portions plates situées entre les saillies (7; 7, 7a), dans lequel les saillies (7; 7, 7a) poussent contre les pôles, mais ne sont pas reliées d'un seul tenant au pôles, et dans lequel,
aux deux extrémités de la rangée de piles de cellules rondes, respectivement une plaque de pôle (3, 4) s'applique à l'extérieur contre la plaque de contact d'extrémité (2; 2a, 2b; 22a, 22b) y située, lesquelles plaques de pôle (3, 4) présentent une paroi plus épaisse par rapport aux plaques de contact (2; 2a, 2b, 2c; 22a, 22b, 22) et forment les extrémités de la rangée de piles de cellules rondes, qui forment les pôles du module de batterie, et dans lequel
les saillies (7) présentent soit des dimensions identiques et sont prévues sur les plaques de contact (2) sur les positions correspondant aux axes des rangées de cellules rondes, dans lequel les saillies (7) contactent chacune un pôle d'une cellule ronde (1) ou les deux pôles montrant l'un vers l'autre de deux cellules rondes contiguës d'une rangée de cellules rondes, de sorte que tous les pôles de cellules rondes sont contactés par l'une des saillies (7),
ou
des plaques de contact (2b, 2c; 22b, 22) contactant les pôles positifs d'une pile de cellules rondes présentent sur leurs faces montrant vers les pôles positifs, sur des positions correspondant aux axes des rangées de cellules rondes, des saillies (7) de dimensions identiques qui contactent chacune un pôle positif d'une cellule ronde (1), et des plaques de contact (2a, 2c; 22a, 22) contactant les pôles négatifs d'une pile de cellules rondes présentent chacune sur leurs faces montrant vers les pôles négatifs, autour des positions correspondant aux axes des zones de cellules rondes, une pluralité de, en particulier trois saillies (7a) de dimensions identiques qui contactent chacune l'un des pôles négatifs d'une cellule ronde (1).

2. Module de batterie selon la revendication 1, **caractérisé par le fait que** les saillies (7) présentent des dimensions identiques et sont prévues sur les plaques de contact (2) sur des positions correspondant aux axes des rangées de cellules rondes, dans lequel les saillies (7) contactent chacune un pôle d'une cellule ronde (1), et dans lequel
respectivement une paire de plaques de contact (2) réalisées en tant que plaques en tôle métallique, en particulier en tant que plaques en tôle de cuivre, est intercalée entre les piles voisines de cellules rondes, les saillies (7) étant formées en tant que projections (7) empreintes dans les plaques de contact (2), dans lequel, de préférence, les deux plaques de contact d'extrémité (2) sont réalisées, elles aussi, en tant que telles plaques en tôle métallique, en particulier plaques en tôle de cuivre (2) comprenant des projections (7) y empreintes, et dans lequel l'ensemble des plaques de contact (2) sont de préférence identiques.

3. Module de batterie selon la revendication 1, **caractérisé par le fait que** les saillies présentent des dimensions identiques et sont prévues sur les plaques de contact sur des positions correspondant aux axes des rangées de cellules rondes, dans lequel les saillies (7) contactent chacune les deux pôles montrant l'un vers l'autre de deux cellules rondes contiguës d'une rangée de cellules rondes, et dans lequel
une plaque de contact réalisée en tant que carte ou une paire de plaques de contact réalisées en tant que cartes est ou bien sont intercalée(s) entre des piles voisines de cellules rondes, et, en particulier, les plaques de contact d'extrémité qui sont prévues aux extrémités de la rangée de piles de cellules rondes, situées dans la direction de la rangée de piles, sont réalisées, elles aussi, en tant que carte, dans lequel les plaques de contact présentent des trous de passage sur les positions correspondant aux axes des rangées de cellules rondes, et dans lequel les saillies sont réalisées en tant que douilles ou bien boulons, de préférence fait(e)s de cuivre, qui sont engagé(e)s dans lesdits trous de passage, ou en tant que points de brasage y placés, dans lequel chacune des saillies d'une plaque de contact est reliée en parallèle, par l'intermédiaire de pistes conductrices sur la plaque de contact respective, à toute autre saillie de la plaque de contact, et dans lequel toutes les plaques de contact sont de préférence identiques.

4. Module de batterie selon la revendication 1, **caractérisé par le fait que** des plaques de contact (2b, 2c; 22b, 22) contactant les pôles positifs d'une pile de cellules rondes présentent sur leurs faces montrant vers les pôles positifs, sur des positions correspondant aux axes des rangées de cellules rondes, des saillies (7) de dimensions identiques qui contactent chacune un pôle positif d'une cellule ronde (1), et des plaques de contact (2a, 2c; 22a, 22) contactant les pôles négatifs d'une pile de cellules rondes présentent chacune sur leurs faces montrant vers les pôles négatifs, autour des positions correspondant aux axes des zones de cellules rondes, une pluralité de, en particulier trois saillies (7a) de dimensions identiques qui contactent chacune l'un des pôles négatifs d'une cellule ronde (1), dans lequel
respectivement une plaque de contact (2; 22) réalisée en tant que plaque en tôle métallique, en particulier plaque en tôle de cuivre (2; 22), est intercalée entre les piles voisines de cellules rondes, et respectivement une plaque de contact d'extrémité (2a; 2b; 22a; 22b) réalisée en tant que plaque en tôle métallique, en particulier plaque en tôle de cuivre (2a; 2b; 22a; 22b), est prévue aux extrémités de la rangée de piles de cellules rondes, situées dans la direction de la rangée de piles, les saillies (7; 7a) étant formées en tant que projections (7; 7a) empreintes dans les plaques de contact (2; 22), dans lequel, de préférence, les deux plaques de contact d'extrémité (2a; 2b; 22a; 22b) présentent, elles aussi, des projections (7; 7a) y formées, et dans lequel l'ensemble des plaques de contact (2; 22) intercalées sont de préférence identiques.

5. Module de batterie selon la revendication 4, **caractérisé par le fait que** les plaques de contact (2; 22) intercalées entre les piles voisines de cellules rondes présentent chacune, sur leurs faces montrant vers les pôles positifs de l'une des piles de cellules rondes, les saillies (7) centrales et, sur leurs faces montrant vers les pôles négatifs de l'autre pile de cellules rondes, les pluralités de saillies (7a) disposées autour de l'axe des rangées de cellules rondes, dans lequel chacune des plaques de contact d'extrémité (2a; 2b; 22a; 22b) ne présente de préférence que les saillies (7) centrales ou les pluralités de saillies (7a).

6. Module de batterie selon l'une quelconque des revendications précédentes 4 ou 5, **caractérisé par le fait que** les saillies (7a) de chaque pluralité de saillies (7a) associée à un pôle négatif sont disposées de manière concentrique et à répartition circonférentielle régulière autour de l'axe associé de la rangée respective de cellules rondes.

7. Module de batterie selon l'une quelconque des revendications précédentes, **caractérisé par le fait qu'**il comprend des moyens de serrage (5; 6; 15, 16) agissant au moins sur l'une des deux extrémités de la rangée de piles de cellules rondes afin d'exercer un effort de serrage sur la rangée de piles de cellules rondes, agissant dans la direction de la rangée de piles.

8. Module de batterie selon la revendication 7, **caractérisé par le fait que** les moyens de serrage (5, 6) agissent sur les plaques de pôle (3, 4).

9. Module de batterie selon l'une quelconque des revendications précédentes, **caractérisé par le fait que** les cellules rondes (1) sont regroupées dans un logement (10) pour former ladite rangée de piles de cellules rondes.

10. Module de batterie selon la revendication 9, **caractérisé par le fait que** ledit logement (10) présente un fond et deux flancs longitudinaux solidaires de celui-ci et s'étendant dans la direction longitudinale le long du fond et vers le haut.

11. Module de batterie selon l'une quelconque des revendications précédentes, **caractérisé par le fait que** les piles de cellules rondes comprennent des couches superposées de cellules rondes (1), dans lequel les cellules rondes (1) de chacune de ces couches de cellules rondes reposent directement sur les cellules rondes (1) de la couche de cellules rondes se trouvant respectivement là-dessous.

12. Module de batterie selon l'une quelconque des revendications 9 à 11, **caractérisé par le fait que** l'on prévoit un couvercle s'ajustant sur le logement (10) qui est détachable, en particulier relevable, et qui forme conjointement avec le logement un boîtier fermé au moins sur le fond, les côtés supérieur et longitudinal d'où partent des lignes de raccordement reliées électriquement aux plaques de pôle (3, 4) ou lequel présente des bornes reliées électriquement aux plaques de pôle.

13. Module de batterie selon l'une quelconque des revendications précédentes, **caractérisé par le fait que** les plaques de contact (2; 2c) intercalées entre les piles de cellules rondes et en particulier également les plaques de contact d'extrémité (2a, 2b) sont intercalées entre les piles de cellules rondes sans être fixées, en particulier insérées dans le logement sans être fixées.

14. Module de batterie selon l'une quelconque des revendications 9 à 13, **caractérisé par le fait que** ledit logement (10) présentent des parois transversales aux extrémités des deux flancs longitudinaux, sur lesquelles s'appuient les moyens de serrage (5, 6) poussant de l'extérieur sur l'une ou sur les deux extrémités de la rangée de piles de cellules rondes, de préférence sur la plaque de pôle (3, 4) y située, la plaque de pôle (3, 4) y située étant logée dans le logement (10) de manière à être mobile dans la direction de la rangée de piles.

15. Module de batterie selon l'une quelconque des revendications précédentes 7 à 13, **caractérisé par le fait que** les plaques de contact (22), les plaques de contact d'extrémité (22a, 22b) et les plaques de pôles présentent des évidements (15; 16) à travers lesquels passent des tirants qui, conjointement avec les moyens de serrage réalisés en particulier comme écrous, exercent l'effort de serrage sur la rangée de piles de cellules rondes.
